# EUROPÄISCHE PATENTSCHRIFT

(11) **EP 3 364 209 B1**
(45) Veröffentlichungstag und Bekanntmachung des Hinweises auf die Patenterteilung: **22.07.2026**
(21) Anmeldenummer: 18153444.7
(22) Anmeldetag: 25.01.2018
(51) Int. Cl.: G01S 5/00, G01S 5/14, G01S 5/02

(54) **VERFAHREN UND SYSTEM ZUR POSITIONSBESTIMMUNG VON MINDESTENS EINEM FLURFÖRDERZEUG**
METHOD AND SYSTEM FOR DETERMINING THE POSITION OF AT LEAST ONE INDUSTRIAL TRUCK
PROCÉDÉ ET SYSTÈME DE DÉTERMINATION DE LA POSITION D'AU MOINS UN CHARIOT DE MANUTENTION

(30) Priorität: 03.02.2017 DE 102017102117
(43) Veröffentlichungstag der Anmeldung: 22.08.2018
(73) Patentinhaber: Jungheinrich Aktiengesellschaft, 22047 Hamburg (DE)
(72) Erfinder: Mänken, Frank, 24558 Henstedt-Ulzburg (DE)
(74) Vertreter: Hauck Patent- und Rechtsanwälte PartmbB

(56) Entgegenhaltungen:
- EP-A1- 2 154 478
- EP-A2- 1 020 834
- DE-A1- 102006 038 856
- DE-B3- 102008 011 539
- US-A1- 2007 152 804

## Beschreibung

Die vorliegende Erfindung betrifft ein Verfahren und ein System zur Positionsbestimmung von mindestens einem Flurförderzeug in einem Bereich mit einer Vielzahl von stationären Funkstationen.

Für die Positionsbestimmung von Flurförderzeugen in Lagerbereichen und anderen definierten Umgebungen sind eine Reihe von unterschiedlichen Ansätzen bekannt. So ist es beispielsweise bekannt, RFID-Transponder in den Boden einzulassen. Bei Überfahrt mit einem Flurförderzeug kann diesem so seine Position mitgeteilt werden. Im Bereich der Funktechnik sind beispielsweise Laufzeitmessungen und/oder Einfallswinkelmessungen zur Positionsbestimmung des Flurförderzeugs relativ zu statisch montierten Einheiten bekannt.

Aus DE 10 2009 004 854 B4 ist ein Verfahren und System zur Positionsbestimmung eines Flurförderzeugs bekannt, bei dem ein mehrachsiger Kreiselsensor, insbesondere ein Gyroskop zum Einsatz kommt.

Aus DE 10 2001 018 520 A1 ist ein Verfahren zum Anfahren eines Lagerplatzes mit einem Flurförderzeug bekannt, bei dem die aktuelle Position des Flurförderzeugs erfasst und zu der aktuellen Position einen auf die Höhe des anzufahrenden Lagerplatzes abgestimmten Hubhöhenvorwahlwert eingestellt wird.

Aus DE 10 2009 013 671 A1 ist eine Vorrichtung zur Positionsbestimmung eines Flurförderzeugs bekannt. Hierbei werden mehreren Lichtquellen an vordefinierten Standorten positioniert und eine die Lichtquelle eindeutig kennzeichnende Strahlung von diesen ausgesendet. Ein Flurförderzeug wertet die eingehende Strahlung unter Einbeziehung der relativen Winkel zueinander aus, um seine aktuelle Position und Orientierung zwischen drei Lichtquellen zu bestimmen.

Aus DE 10 2008 011 539 B3 ist ein vollautomatischer, fahrerloser Portalhubstapler bekannt geworden, der mit Sensorsystemen zur Fahrzeugortung und zur Navigation ausgestattet ist. Die Signale der Sensorsysteme werden in einem Sensorfusionssystem ausgewertet, überwacht und die so ermittelten aktuellen Ortkoordinaten des Fahrzeugs dann einem System von elektrischen Steuerungen übermittelt, um automatisch zu lenken, zu fahren und das Fahrzeug zu positionieren.

Aus EP 2 154 478 A1 ist ein Verfahren zur Fahrerunterstützung bei einem Flurförderzeug bekannt geworden, das eine Ortungsvorrichtung zur Ermittlung der Position des Flurförderzeuges aufweist. Zudem werden durch das Lagerverwaltungssystem an den Steuerungscomputer Informationen über die Position weiterer Flurförderzeuge übermittelt, und wenn ein weiteres Flurförderzeug sich auf dem Anfahrweg befindet, ein alternativer Anfahrweg berechnet.

Der Erfindung liegt die Aufgabe zugrunde, ein Verfahren und ein System zur Positionsbestimmung von mindestens einem Flurförderzeug in einem Bereich mit einer Vielzahl von stationären Funkstationen bereitzustellen, das mit möglichst großer Genauigkeit die aktuelle Position des Flurförderzeugs bestimmen kann.

Erfindungsgemäß wird die Aufgabe durch ein Verfahren mit den Merkmalen aus Anspruch 1 und durch ein System gemäß Anspruch 9 gelöst. Vorteilhafte Ausgestaltungen bilden den Gegenstand der Unteransprüche.

Das erfindungsgemäße Verfahren ist vorgesehen und bestimmt, eine Position von mindestens einem Flurförderzeug in einem Bereich mit einer Vielzahl von stationären Funkstationen zu bestimmen. Der Begriff der Position umfasst hierbei die räumliche Position des Flurförderzeugs und seine Orientierung in dieser Position. Die Positionsbestimmung des mindestens einen Flurförderzeugs erfolgt in einem Bereich mit einer Vielzahl von stationären Funkstationen, die ansprechend auf ein Positionsbestimmungssignal ein Positionssignal aussenden. Das Flurförderzeug ist mit einer mobilen Funkstation ausgestattet. Stationäre und mobile Funkstationen sind als Sende- und Empfangseinheiten ausgebildet, die in der Lage sind, Funksignale zu empfangen und auszusenden. Bei dem erfindungsgemäßen Verfahren werden Fahrzeugdaten zur Fahrgeschwindigkeit und/oder zu einem Lenkwinkel an dem Fahrzeug ermittelt. Die ermittelten Fahrzeugdaten beschreiben den Istzustand oder den Sollzustand des Fahrzeugs. Das erfindungsgemäße Verfahren sieht ferner vor, dass ein Positionsbestimmungssignal mit der mobilen Funkstation an die stationären Funkstationen gesendet wird. Die stationären Funkstationen senden, ansprechend auf ein empfangenes

Positionsbestimmungssignal jeweils ihr Positionssignal aus. Erfindungsgemäß ist vorgesehen, dass zusätzliche Daten dem Positionsbestimmungssignal und/oder dem Positionssignal angehängt sind. Bei dem Positionsbestimmungssignal, also dem vom Flurförderzeug ausgehenden Signal, werden als zusätzliche Daten Fahrzeugdaten angehängt, die sich auf eine Fahrgeschwindigkeit und/oder einen Lenkwinkel des Flurförderzeugs beziehen. Bei dem Positionssignal, als dem von den stationären Funkstationen ausgehenden Signal, umfassen die zusätzlichen Daten Positionsdaten von Flurförderzeugen. Das Verfahren sieht vor, mehrere Positionssignale mit der mobilen Funkstation zu empfangen, wobei die Positionssignale von mindestens drei unterschiedlichen stationären Funkstationen stammen. Durch die Verwendung von drei stationären Funkstationen ist die Position des Flurförderzeugs eindeutig bestimmt.

In einer bevorzugten Ausgestaltung wird die aktuelle Position mit einem Kalman-Filter unter Einbeziehung der ermittelten Fahrzeugdaten bestimmt. Bei dem Kalman-Filter kann mit einem erweiterten Zustandsraum für das Flurförderzeug gearbeitet werden, der beispielsweise auch dessen translatorische oder rotatorische Bewegung umfasst und so eine genauere Positionsbestimmung ermöglicht.

Bevorzugt weisen die Fahrzeugdaten auch die aktuelle Position des Flurförderzeugs auf. Auf diese Weise werden mit den Positionsbestimmungssignalen auch die aktuellen Fahrzeugpositionen für die stationären Funkstationen bereitgestellt, so dass die stationären Funkstationen mit ihren Positionssignalen in den anhängenden zusätzlichen Daten die Positionen der Flurförderzeuge an alle mobilen Funkstationen verteilen können.

In einer bevorzugten Weiterbildung des Verfahrens empfängt die mobile Funkstation Informationen zur aktuellen Position von anderen Flurförderzeugen.

Diese Information wird aus den empfangenen Positionssignalen ermittelt. Bei dieser Weiterbildung des erfindungsgemäßen Verfahrens zur Positionsbestimmung werden auf dem Funkkanal zur Positionsbestimmung zugleich auch Positionsdaten von beteiligten Flurförderzeugen ausgetauscht. In einer möglichen Ausgestaltung werden diese Informationen zwischen den mobilen Funkstationen, also zwischen den jeweiligen Fahrzeugen ausgetauscht.

Auch ist es möglich, die Informationen zu den aktuellen Positionen von den Flurförderzeugen von den stationären Funkstationen ausgehend an alle Flurförderzeuge zu senden. Die stationären Funkstationen ermitteln die Daten zu den aktuellen Positionen der Flurförderzeuge aus den empfangenen Positionsbestimmungssignalen, denen auch die aktuelle Fahrzeugposition angehängt ist.

In einer bevorzugten Weiterbildung des Verfahrens drosselt das mindestens eine Flurförderzeug seine eigene Geschwindigkeit und /oder ändert seinen Lenkwinkel, wenn die Auswertung der Positionen und/oder Bewegungen von anderen Fahrzeugen auf eine Kollisionsgefahr hinweisen. In dieser Ausgestaltung des erfindungsgemäßen Verfahrens erkennt das Flurförderzeug selbständig aus den vorliegenden Daten, dass in seiner Position oder in seiner Umgebung ein erhöhtes Kollisionsrisiko besteht. Daher wird dann die Fahrgeschwindigkeit gedrosselt und/oder die Fahrrichtung geändert. Bei gedrosselter Fahrgeschwindigkeit ist es für den Benutzer des Flurförderzeuges einfacher auf drohende Kollisionen zu reagieren und Zusammenstöße zu vermeiden. Bei einer drohenden Kollision kann auch eine Änderung der Fahrrichtung helfen, um Zeit für ein Ausweichmanöver zu finden.

In einer weiteren bevorzugten Ausgestaltung ist es vorgesehen, dass mehrere der mobilen Funkstationen, ansprechend auf ein Positionsbestimmungssignal, mit einem Fahrzeugpositionssignal antworten, so dass ein das Fahrzeugpositionssignal empfangendes Flurförderzeug seinen Abstand bestimmen kann. Dieses Abstandsbestimmungsverfahren durch gesendete Positionssignale kann auch ergänzend zu dem Austausch von Informationen zur aktuellen Position der anderen Flurförderzeuge eingesetzt werden.

Die erfindungsgemäße Aufgabe wird ebenfalls durch ein System zur Positionsbestimmung gemäß Anspruch 9 gelöst. Das erfindungsgemäße System dient zur Positionsbestimmung von mindestens einem Flurförderzeug in einem Bereich mit einer Vielzahl von stationären Funkstationen, die ausgebildet sind, um auf ein Positionsbestimmungssignal ansprechend ein Positionssignal auszusenden. Jedes Flurförderzeug weist eine mobile Funkstation auf, die ausgebildet ist, um ein Positionsbestimmungssignal zu senden und Positionssignale zu empfangen. Ferner ist eine Auswerteeinheit vorgesehen, die ausgebildet ist, um an ein zu sendendes Positionsbestimmungssignal zusätzliche Fahrzeugdaten anzuhängen und aus empfangenen Positionssignalen Positionsdaten zu den Flurförderzeugen abzutrennen. Die Auswerteeinheit ist auch dazu ausgebildet, eine aktuelle Fahrzeugposition aus mindestens drei Positionssignalen zu ermitteln. Das erfindungsgemäße System besitzt eine Auswerteeinheit, die einerseits die aktuelle Fahrzeugposition aus empfangenen Positionssignalen ermittelt und andererseits dazu ausgebildet ist, Fahrzeugdaten mit Positionsbestimmungssignalen zu senden und/oder Positionsdaten aus empfangenen Positionssignalen abzutrennen.

In einer bevorzugten Weiterbildung des Systems umfassen die Fahrzeugdaten Fahrgeschwindigkeit und/oder Lenkwinkel des Flurförderzeugs. Weiter bevorzugt umfassen die Fahrzeugdaten auch eine aktuelle Fahrzeugposition. Mit dem erfindungsgemäßen System wird die Möglichkeit geschaffen, Positionsdaten zu den Einzelflurförderzeugen besonders wirkungsvoll zwischen sämtlichen Fahrzeugen zu verteilen. Einerseits melden die Fahrzeuge ihre aktuelle Fahrzeugposition mit den Fahrzeugdaten an die stationären Funkstationen, während zugleich die stationären Funkstationen die Positionsdaten der Flurförderzeuge mit den Positionssignalen an die Flurförderzeuge verteilen. Auf diese Weise werden jedem Flurförderzeug die Positionsdaten der anderen Flurförderzeuge zur Verfügung gestellt, so dass in an sich bekannter Art und Weise eine Kollisionsvermeidung durchgeführt werden kann.

In einer weiteren bevorzugten Ausgestaltung des erfindungsgemäßen Systems ist die Auswerteeinheit ausgebildet, um aus den empfangenen Positionssignalen Positionsdaten von anderen Flurförderzeugen zu ermitteln. Auf diese Weise stehen Positionsdaten zu den anderen Flurförderzeugen lokal an den einzelnen Flurförderzeugen zur Verfügung.

In einer weiteren bevorzugten Ausgestaltung sind die mobilen Funkstationen dazu ausgebildet, um von den anderen mobilen Funkstationen Signale zur jeweiligen Position eines anderen Flurförderzeugs zu empfangen.

Die Verteilung der Positionsdaten der anderen Flurförderzeuge über die Vielzahl von Flurförderzeugen erfolgt bei dieser bevorzugten Ausgestaltung nicht nur über die stationären Funkstationen, sondern auch direkt zwischen den mobilen Funkstationen.

In einer weiter bevorzugten Ausgestaltung sind die stationären Funkstationen dazu ausgebildet, aktuelle Positionen von Flurförderzeugen aus den erhaltenen Positionsbestimmungssignalen zu ermitteln. Die so ermittelten aktuellen Positionen der Flurförderzeuge werden dann bei den Positionssignalen den anderen Flurförderzeugen übermittelt.

Der beanspruchte Schutzbereich wird durch die anhängenden Ansprüche bestimmt.

Bevorzugte Ausgestaltungen der Erfindung werden nachfolgend näher erläutert. Es zeigen:
- Fig. 1: in einer schematischen Ansicht zwei Flurförderzeuge mit unterschiedlicher Anbindung ihrer mobilen Funkeinheiten sowie drei schematisch dargestellte stationäre Funkeinheiten in unterschiedlichen Ausführungen und
- Fig. 2: ein Lager mit drei stationären Funkeinheiten.

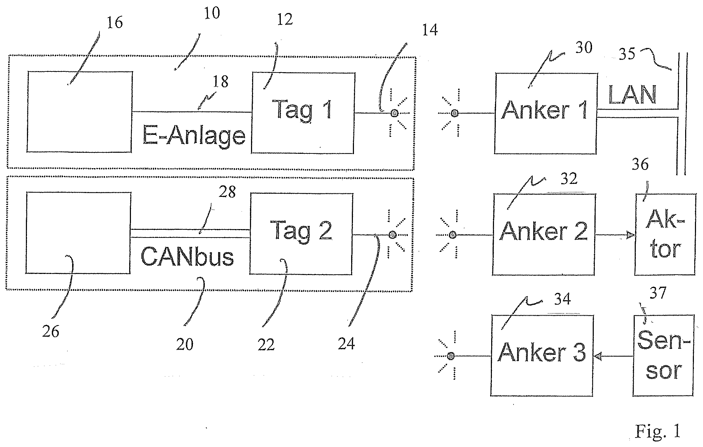

Fig. 1 zeigt eine schematische Ansicht eines Flurförderzeugs 10, das eine mobile Funkeinheit 12 besitzt. Die mobile Funkeinheit 12 besitzt eine schematisch dargestellte Antenne 14. Funkeinheit 12 und Antenne 14 bilden gemeinsam eine mobile Funkstation. Das schematisch dargestellte Flurförderzeug 10 besitzt eine Fahrzeugsteuerung 16, die über eine interne Verkabelung mit der mobilen Funkeinheit 12 verbunden ist.

Das ebenfalls schematisch dargestellte Flurförderzeug 20 besitzt eine mobile Funkeinheit 22 mit einer Antenne 24. Die Fahrzeugsteuerung 26 ist über einen CAN-Bus 28 mit der mobilen Funkeinheit 22 verbunden.

Die stationären Funkstationen werden auch als Anker bezeichnet. Die Anker 30, 32, 34 sind raumfest in einem Lagerbereich angeordnet. Jeder der Anker besitzt eine Antenne, über die Funksignale gesendet und empfangen werden können. Die stationäre Funkstation 30 ist über ein lokales Netzwerk (LAN) mit der weiteren Datenverarbeitung im Lager verbunden und kann so beispielsweise auf die Daten eines Warenmanagementsystems zugreifen.

Die stationäre Funkstation 32 kommuniziert mit einem Aktuator 36. Durch einen entsprechenden Steuerbefehl von dem Fahrzeug kann über die stationäre Funkstation 32 der Aktuator 36 betätigt werden. So kann beispielsweise ein herannahendes Flurförderzeug ein Öffnen eines Lagertores auslösen.

Die stationäre Funkstation 34 ist mit einem Sensor verbunden, wodurch die Möglichkeit besteht, im Lager erfasste Sensorwerte, wie beispielsweise Helligkeit und Temperatur an das oder die Flurförderzeuge im Lager weiterzuleiten.

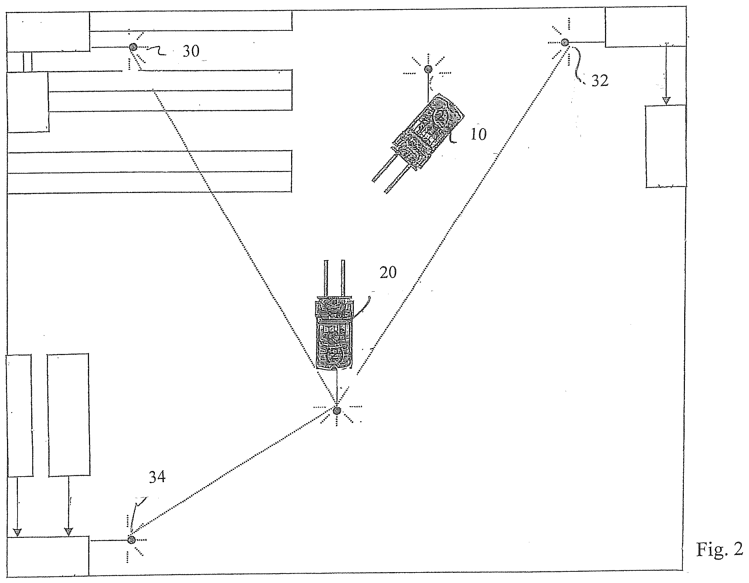

Fig. 2 zeigt für die beiden Flurförderzeuge 10 und 20 in einer schematischen Ansicht die Funkortung. Das Flurförderzeug 20 hat über seine mobile Funkstation nacheinander an die stationären Funkstationen 30, 32, 34 Positionsbestimmungssignale gesendet. Die stationären Funkstationen 30, 32, 34 antworten nach einer vorbestimmten Zeitspanne mit einem Positionssignal. Aus der Zeitspanne, die auf die Antwort gewartet werden muss, kann die Entfernung zu der stationären Funkstation bestimmt werden, wobei die Zeitspanne sich aus der doppelten Laufzeit und einer vorbestimmten Verarbeitungszeitspanne für die stationäre Funkstation ergibt. Aus der Entfernung zu mindestens drei stationären Funkstationen kann die Position des Flurförderzeugs 20 bestimmt werden. Die Position der drei stationären Funkstationen ist hierbei dem Flurförderzeug 20 bekannt.

Weiterhin wird an dem Flurförderzeug die Fahrgeschwindigkeit und die Lenkwinkelstellung an die mobile Funkstation übertragen. Die Übertragung erfolgt dabei entweder über die fahrzeugeigenen CAN-Bus 28 oder über hierfür vorgesehene Leitungen 18. Von der mobilen Funkstation werden diese Daten zusammen mit der aktuellen Fahrzeugposition an die stationären Funkstationen gesendet, um von diesen an alle anderen mobilen Funkstationen gesendet zu werden.

Somit werden die aktuellen Positionsdaten und eventuell auch die aktuellen Fahrzeugdaten zur Fahrgeschwindigkeit und zum Lenkwinkel allen Flurförderzeugen zur Verfügung gestellt, so diese jeweils eine wirksame Kollisionskontrolle durchführen können.

In dem Flurförderzeug wird unter Verwendung des Kalman-Filters die Positionsbestimmung über Funk durch die aktuellen Daten zur Fahrzeuggeschwindigkeit und zum Lenkwinkel ergänzt und zu einer genauen Positionsinformation verarbeitet. Hierbei wird nicht nur die Position des einzelnen Fahrzeugs bestimmt, sondern auch die Position der anderen Fahrzeuge kann bestimmt werden, wobei auch die anderen Flurförderzeuge einen Kalman -Filter verwenden können, wenn Fahrgeschwindigkeit und/oder Lenkwinkel des jeweiligen Flurförderzeugs zur Verfügung stehen.

Das System zur genauen Positionsbestimmung besitzt zudem den Vorteil, dass positionsabhängig Signale für das Verhalten des Flurförderzeugs erzeugt werden können. Beispielsweise kann die Fahrgeschwindigkeit in Bereichen, in denen viele andere Flurförderzeuge sich befinden und bewegen, reduziert werden. Auch kann die Position des Flurförderzeugs entweder untereinander oder über die stationären Funkeinheiten zwischen den Flurförderzeugen ausgetauscht werden, wodurch Bewegungen erkannt und die Fahrgeschwindigkeit bei zu großer Fahrzeugdichte reduziert werden kann.

Auch ist es möglich, eine Abstandsbestimmung zu den anderen Fahrzeugen durchzuführen, indem hier, wie bei den stationären Funkeinheiten, eine Laufzeitmessung erfolgt.

### Bezugszeichenliste

- 10: Flurförderzeug
- 12: mobile Funkeinheit
- 14: Antenne
- 16: Fahrzeugsteuerung
- 18: leitungsgebundene Verbindung
- 20: Flurförderzeug
- 22: Funkeinheit
- 24: Antenne
- 26: Fahrzeugsteuerung
- 28: CAN-Bus
- 30: stationäre Funkeinheit
- 32: stationäre Funkeinheit
- 34: stationäre Funkeinheit
- 35: LAN
- 36: Aktuator

## Patentansprüche

1. Verfahren zur Positionsbestimmung von mindestens einem Flurförderzeug (20) in einem Bereich mit einer Vielzahl von stationären Funkstationen (30, 32, 34), die, ansprechend auf ein Positionsbestimmungssignal, ein Positionssignal aussenden, wobei das Flurförderzeug (20) eine mobile Funkstation (12) aufweist, mit folgenden Verfahrensschritten:
- Ermitteln von Fahrzeugdaten zur Fahrgeschwindigkeit und/oder einem Lenkwinkel an dem Flurförderzeug (20), wobei die Fahrzeugdaten auch die aktuelle Fahrzeugposition aufweisen,
- Senden eines Positionsbestimmungssignals mit der mobilen Funkstation (12) an die stationären Funkstationen (30, 32, 34),
- Senden jeweils eines Positionssignals durch die stationären Funkstationen (30, 32, 34), ansprechend auf ein empfangenes Positionsbestimmungssignal,
- Empfangen von mehreren Positionssignalen mit der mobilen Funkstation (12) von mindestens drei stationären Funkstationen (30, 32, 34) und
- Anhängen von Daten in Form der ermittelten Fahrzeugdaten an das Positionsbestimmungssignal und/oder in Form von Positionsdaten zu anderen Flurförderzeugen an das Positionssignal,
- Ermitteln einer aktuellen Fahrzeugposition aus mindestens drei empfangenen Positionssignalen,
- wobei die stationären Funkstationen (30, 32, 34) aktuelle Positionen von Flurförderzeugen aus den empfangenen Positionsbestimmungssignalen ermitteln und mit ihren Positionssignalen an alle mobilen Funkstationen verteilen,
- wobei die mobile Funkstation (12) Informationen zur aktuellen Position von anderen Flurförderzeugen aus den empfangenen Positionssignalen ermittelt.

2. Verfahren nach Anspruch 1, **dadurch gekennzeichnet, dass** die aktuelle Position mit einem Kalman-Filter unter Einbeziehung der Fahrzeugdaten bestimmt wird.

3. Verfahren nach einem der Ansprüche 1 bis 2, **dadurch gekennzeichnet, dass** Informationen zur aktuellen Position von anderen Flurförderzeugen direkt von deren mobilen Funkstationen (12) empfangen werden.

4. Verfahren nach einem der Ansprüche 1 bis 3, **dadurch gekennzeichnet, dass** mindestens ein Flurförderzeug (20) eine Geschwindigkeit drosselt und/oder seinen Lenkwinkel ändert, wenn die Auswertung der Position und/oder der Bewegung von anderen Flurförderzeugen eine Kollisionsgefahr anzeigt.

5. Verfahren nach einem der Ansprüche 1 bis 4, **dadurch gekennzeichnet, dass** mehrere der mobilen Funkstationen (30, 32, 34) auf ein Positionsbestimmungssignal ansprechend mit einem Fahrzeugpositionssignal antworten, so dass ein das Positionsbestimmungssignal sendendes Flurförderzeug (20) seinen Abstand jeweils zu den das Fahrzeugpositionssignal sendenden Flurförderzeugen bestimmen kann.

6. Verfahren nach einem der Ansprüche 1 bis 5, **dadurch gekennzeichnet, dass** positionsabhängig Fahrzeugfunktionen oder externe Aktuatoren (36) geschaltet werden.

7. System zur Positionsbestimmung von mindestens einem Flurförderzeug (20) in einem Bereich mit einer Vielzahl von stationären Funkstationen (30, 32, 34), die ausgebildet sind, um auf ein Positionsbestimmungssignal ansprechend ein Positionssignal auszusenden, wobei jedes Flurförderzeug (20) eine mobile Funkstation (12) aufweist, die ausgebildet ist, um ein Positionsbestimmungssignal zu senden und Positionssignale zu empfangen, und eine Auswerteinheit aufweist, die ausgebildet ist, um an ein zu sendendes Positionsbestimmungssignal zusätzliche Daten in Form von Fahrzeugdaten anzuhängen und/oder aus empfangenen Positionssignalen Positionsdaten von anderen Flurförderzeugen abzutrennen, wobei die Auswerteeinheit eine aktuelle Fahrzeugposition aus mindestens drei Positionssignalen ermittelt und die Fahrzeugdaten Fahrgeschwindigkeit und/oder Lenkwinkel sowie eine aktuelle Fahrzeugposition des Flurförderzeugs umfassen, wobei die stationären Funkstationen (30, 32, 34) aktuelle Positionen von Flurförderzeugen aus den empfangenen Positionsbestimmungssignalen ermitteln und mit ihren Positionssignalen an alle mobilen Funkstationen verteilen und die mobile Funkstation (12) Informationen zur aktuellen Position von anderen Flurförderzeugen aus den empfangenen Positionssignalen ermittelt.

8. System nach Anspruch 7, **dadurch gekennzeichnet, dass** die Auswerteeinheit ausgebildet ist, um aus den empfangenen Positionssignalen Positionsdaten von anderen Flurförderzeugen zu ermitteln.

9. System nach Anspruch 7 oder 8, **dadurch gekennzeichnet, dass** die mobilen Funkstationen (12) dazu ausgebildet sind, von den anderen mobilen Funkstationen Signale zur jeweiligen Position von einem anderen Flurförderzeug zu empfangen.

10. System nach einem der Ansprüche 7 bis 9, **dadurch gekennzeichnet, dass** die stationären Funkstationen (30, 32, 34) dazu ausgebildet sind, aktuelle Positionen von Flurförderzeugen aus den erhaltenen Positionsbestimmungssignalen zu ermitteln.

## Claims

1. A method for determining the position of at least one industrial truck (20) in a region having a plurality of stationary radio stations (30, 32, 34) which emit a position signal in response to a position determination signal, wherein the industrial truck (20) comprises a mobile radio station (12), said method comprising the following method steps:
- ascertaining vehicle data relating to the travel speed and/or a steering angle at the industrial truck (20), wherein the vehicle data also comprise the current vehicle position,
- sending a position determination signal by means of the mobile radio station (12) to the stationary radio stations (30, 32, 34),
- sending a position signal by means of each of the stationary radio stations (30, 32, 34) in response to a received position determination signal,
- receiving multiple position signals from at least three stationary radio stations (30, 32, 34) by means of the mobile radio station (12), and
- appending data in the form of the ascertained vehicle data to the position determination signal and/or appending data in the form of position data relating to other industrial trucks to the position signal,
- ascertaining a current vehicle position from at least three received position signals,
- wherein the stationary radio stations (30, 32, 34) ascertain current positions of industrial trucks from the received position determination signals and distribute said positions with their position signals to all mobile radio stations,
- wherein the mobile radio station (12) ascertains information relating to the current position of other industrial trucks from the received position signals.

2. The method according to claim 1, **characterized in that** the current position is determined using a Kalman filter taking into account the vehicle data.

3. The method according to any one of claims 1 to 2, **characterized in that** information relating to the current position of other industrial trucks is directly received from the mobile radio stations (12) thereof.

4. The method according to any one of claims 1 to 3, **characterized in that** at least one industrial truck (20) reduces a speed and/or changes its steering angle if the evaluation of the position and/or movement of other industrial trucks indicates a risk of collision.

5. The method according to any one of claims 1 to 4, **characterized in that** multiple of the mobile radio stations respond to a position determination signal with a vehicle position signal, such that an industrial truck (20) sending the position determination signal can determine its distance from each of the industrial trucks sending the vehicle position signal.

6. The method according to any one of claims 1 to 5, **characterized in that** vehicle functions or external actuators (36) are switched depending on the position.

7. A system for determining the position of at least one industrial truck (20) in a region having a plurality of stationary radio stations (30, 32, 34) which are designed to emit a position signal in response to a position determination signal, wherein each industrial truck (20) comprises a mobile radio station (12) which is designed to send a position determination signal and to receive position signals, and comprises an evaluation unit which is designed to append additional data in the form of vehicle data to a position determination signal to be sent and/or to extract position data of other industrial trucks from received position signals, wherein the evaluation unit ascertains a current vehicle position from at least three position signals and the vehicle data include a travel speed and/or steering angle as well as a current vehicle position of the industrial truck, wherein the stationary radio stations (30, 32, 34) ascertain current positions of industrial trucks from the received position determination signals and distribute said positions with their position signals to all mobile radio stations and the mobile radio station (12) ascertains information relating to the current position of other industrial trucks from the received position signals.

8. The system according to claim 7, **characterized in that** the evaluation unit is designed to ascertain position data of other industrial trucks from the received position signals.

9. The system according to claim 7 or 8, **characterized in that** the mobile radio stations (12) are designed to receive signals relating to the respective position of another industrial truck from the other mobile radio stations.

10. The system according to any one of claims 7 to 9, **characterized in that** the stationary radio stations (30, 32, 34) are designed to ascertain current positions of industrial trucks from the obtained position determination signals.

## Revendications

1. Procédé de détermination de la position d'au moins un chariot de manutention (20) dans une zone comprenant une pluralité de stations radio stationnaires (30, 32, 34), lesquelles émettent un signal de position en réponse à un signal de détermination de position, le chariot de manutention (20) présentant une station radio mobile (12), comprenant les étapes de procédé suivantes :
- détermination de données de véhicule relatives à la vitesse de véhicule et/ou à un angle de braquage du chariot de manutention (20), les données de véhicule présentant également la position actuelle du véhicule,
- émission d'un signal de détermination de position au moyen de la station radio mobile (12) vers les stations radio stationnaires (30, 32, 34),
- émission d'un signal de position respectivement par les stations radio stationnaires (30, 32, 34) en réponse à un signal de détermination de position reçu,
- réception de plusieurs signaux de position par la station radio mobile (12) depuis au moins trois stations radio stationnaires (30, 32, 34) et
- ajout de données sous la forme des données de véhicule déterminées au signal de détermination de position et/ou sous la forme de données de position relatives à d'autres chariots de manutention au signal de position,
- détermination d'une position actuelle de véhicule à partir d'au moins trois signaux de position reçus,
- dans lequel les stations radio stationnaires (30, 32, 34) déterminent des positions actuelles de chariots de manutention à partir des signaux de détermination de position reçus et les transmettent avec leurs signaux de position à toutes les stations radio mobiles,
- dans lequel la station radio mobile (12) détermine des informations concernant la position actuelle d'autres chariots de manutention à partir des signaux de position reçus.

2. Procédé selon la revendication 1, **caractérisé en ce que** la position actuelle est déterminée à l'aide d'un filtre de Kalman en intégrant les données de véhicule.

3. Procédé selon l'une des revendications 1 à 2, **caractérisé en ce que** des informations relatives à la position actuelle d'autres chariots de manutention sont reçues directement depuis leurs stations radio mobiles (12).

4. Procédé selon l'une des revendications 1 à 3, **caractérisé en ce qu'**au moins un chariot de manutention (20) réduit sa vitesse et/ou modifie son angle de braquage lorsque l'évaluation de la position et/ou du déplacement d'autres chariots de manutention indique un risque de collision.

5. Procédé selon l'une des revendications 1 à 4, **caractérisé en ce que** plusieurs des stations radio mobiles répondent par un signal de position de véhicule à un signal de détermination de position, de sorte qu'un chariot de manutention (20) émettant le signal de détermination de position peut déterminer sa distance respectivement par rapport aux chariots de manutention émettant le signal de position de véhicule.

6. Procédé selon l'une des revendications 1 à 5, **caractérisé en ce que** des fonctions de véhicule dépendantes de la position ou des actionneurs externes (36) sont commandés.

7. Système de détermination de la position d'au moins un chariot de manutention (20) dans une zone comprenant une pluralité de stations radio stationnaires (30, 32, 34), lesquelles sont conçues pour émettre un signal de position en réponse à un signal de détermination de position, dans lequel chaque chariot de manutention (20) présente une station radio mobile (12) conçue pour émettre un signal de détermination de position et pour recevoir des signaux de position, et présente une unité d'évaluation conçue pour ajouter des données supplémentaires sous la forme de données de véhicule à un signal de détermination de position à émettre, et/ou pour extraire des données de position d'autres chariots de manutention à partir de signaux de position reçus, dans lequel l'unité d'évaluation détermine une position actuelle de véhicule à partir d'au moins trois signaux de position, et les données de véhicule comportent la vitesse de véhicule et/ou l'angle de braquage ainsi qu'une position actuelle de véhicule du chariot de manutention, dans lequel les stations radio stationnaires (30, 32, 34) déterminent des positions actuelles de chariots de manutention à partir des signaux de détermination de position reçus et les transmettent avec leurs signaux de position à toutes les stations radio mobiles, et la station radio mobile (12) détermine des informations concernant la position actuelle d'autres chariots de manutention à partir des signaux de position reçus.

8. Système selon la revendication 7, **caractérisé en ce que** l'unité d'évaluation est conçue pour déterminer des données de position d'autres chariots de manutention à partir des signaux de position reçus.

9. Système selon la revendication 7 ou 8, **caractérisé en ce que** les stations radio mobiles (12) sont conçues pour recevoir des signaux relatifs à la position respective d'un autre chariot de manutention, depuis les autres stations radio mobiles.

10. Système selon l'une des revendications 7 à 9, **caractérisé en ce que** les stations radio stationnaires (30, 32, 34) sont conçues pour déterminer des positions actuelles de chariots de manutention à partir des signaux de détermination de position obtenus.
